# EUROPÄISCHE PATENTANMELDUNG

(11) **EP 2 799 350 A1**
(43) Veröffentlichungstag der Anmeldung: **05.11.2014**
(21) Anmeldenummer: 13002372.4
(22) Anmeldetag: 03.05.2013
(51) Int. Cl.: B65B 43/44, B65G 59/06, B65G 59/10, B65B 57/04

(54) **Entstapler**

(71) Anmelder: ES-Plastic GmbH, 94116 Hutthurm (DE)
(72) Erfinder: Schmalhofer, Hans, 94116 Hutthurm (DE)
(74) Vertreter: Köster, Hajo

(57) **Zusammenfassung**

Bereitgestellt wird eine Vorrichtung zum Entstapeln von ineinander gestapelten Schalen (S_{E}, S₁, S₂, S₃, S₄, S₅ ....), die mit einem insbesondere umlaufenden Rand (4) ausgestattet sind, mit mindesten einem Schacht (11) zur Aufnahme eines Schalenstapels (2), mit einem unteren beweglichen Separiermesser (5), das zwischen einer geschlossenen Position, in der es den Schacht (11) entnahmeseitig abschließt, und einer geöffneten Position, in der die untere zu entnehmenden Schale (S_{E}) freigegeben ist, sowie vice versa bewegbar angeordnet ist und mit einer angetriebenen, beweglichen Saugvorrichtung (3) mit mindestens einem Saugelement (12) zur Anlage an die zu entnehmenden Schale (S_{E}). Diese Vorrichtung (1) ist gekennzeichnet durch ein oberes bewegliches Trennmesser (7), das zwischen einer geschlossenen Position, in der es in den Raum zwischen dem Rand (4) der unteren, zu entnehmenden Schale (S_{E}) und dem Rand (4) der darüber angeordneten Schale (S₁) hineinragt, und einer geöffneten Position, in der der Schalenstapel (2) freigegeben ist, sowie vice versa bewegbar angeordnet ist. Mit dieser Vorrichtung können ineinander gestapelte Schalen leicht, präzise und schnell entstapelt werden.

## Beschreibung

Die Erfindung betrifft eine Vorrichtung zum Entstapeln von ineinander gestapelten Schalen, die mit einem insbesondere umlaufenden Rand ausgestattet sind, mit mindesten einem Schacht zur Aufnahme eines Schalenstapels, mit einem unteren beweglichen Separiermesser, das zwischen einer geschlossenen Position, in der es den Schacht entnahmeseitig abschließt, und einer geöffneten Position, in der die untere zu entnehmenden Schale freigegeben ist, sowie vice versa bewegbar angeordnet ist und mit einer angetriebenen, beweglichen Saugvorrichtung mit mindestens einem Saugelement zur Anlage an die zu entnehmenden Schale.

Bei den hier in Rede stehenden Schalen handelt es sich insbesondere um Verpackungsschalen sowie weiterhin insbesondere um sogenannte "MAP-Schalen".

Auch wenn die Erfindung anhand dieser Schalen näher erläutert ist, kann sie jedoch für alle Arten von Behältern, die ineinander gestapelt werden können eingesetzt werden.

Die genannten Verpackungsschalen dienen insbesondere zum Verpacken von Lebensmitteln und werden üblicherweise durch Tiefziehen eines Kunststoffmaterials, beispielsweise einer Kunststofffolie, hergestellt. Danach werden sie ineinander gestapelt, um platzsparend zu demjenigen Betrieb transportiert zu werden, in dem das zu verpackende Lebensmittel in die Schale eingebracht und üblicherweise dann verschlossen wird, beispielsweise durch eine transparente Folie.

Um das Lebensmittel in die einzelne Schale einbringen zu können, müssen die gestapelten Schalen vereinzelt werden. Dazu werden unterschiedlichste Vorrichtungen zum Entstapeln der ineinander gestapelten Schalen eingesetzt. So existieren beispielsweise Vakuumentstapler und auch Schraubenentstapler. Diese bekannten Vorrichtungen besitzen üblicherweise mehrere Schächte zur Aufnahme jeweils eines Schalenstapels. Diese Schächte können sowohl senkrecht als auch geneigt angeordnet sein.

Ein Vertreter einer derartigen Vorrichtung zum Entstapeln von Behältern ist in der DE 10 2008 001315 A1 beschrieben.

Diese bekannte Vorrichtung weist mehrere geneigte Schächte zur Aufnahme jeweils eines Behälterstapels auf. Diese Schächte sind durch Separiermesser abgeschlossen, an welchen der unterste Behälter in Anlage kommt.

Die Separiermesser bestehen aus einzelnen Messerteilen, die paarweise zusammen gefahren und wieder auseinander gefahren werden können, um den zu vereinzelnden Behälter freizugeben oder um ein weiteres Nachrutschen des Behälterstapels zu verhindern. Der zu vereinzelnden Behälter wird mit Hilfe eines Saugelements ergriffen und auf ein Transportband befördert.

Der Einsatz eines Saugelementes zum Ergreifen eines zu vereinzelnden Behälters ist auch aus der EP 0316247 A2 bekannt.

Ergänzend wird auf die DE 20 2004 020 941 U1 verwiesen

Allen bekannten gattungsgemäßen Vorrichtungen ist der Nachteil gemeinsam, dass häufig Schalen beim Entstapeln oder danach hängen bleiben. Auch sind die Entstapelungsgeschwindigkeiten in vielen Fällen unzureichend. Zu berücksichtigen ist in diesem Zusammenhang, dass die zu entstapelnden Schalen leicht verbiegbar sind und nur über eine geringe Eigenstabilität verfügen.

Aufgabe der vorliegenden Erfindung ist es, eine gattungsgemäße Vorrichtung bereit zu stellen, mit der ineinander gestapelte Schalen leicht, präzise und schnell entstapelt werden können.

Diese Lehre wird gelöst durch eine Vorrichtung zum Entstapeln gemäß der Lehre des Anspruchs 1.

Die erfindungsgemäße Vorrichtung, die auch als Entstapler bezeichnet werden kann, besitzt somit einerseits ein unteres bewegliches Separiermesser, das zwischen einer geschlossenen Position, in der es den Schacht entnahmeseitig abschließt, und einer geöffneten Position, in der die untere zu entnehmende Schale freigegeben und bewegbar angeordnet ist, wobei diese Bewegung auch vice versa erfolgen kann.

Der hier verwendet Terminus "abschließen" bezeichnet nicht etwa ein Verschließen sonder soll lediglich zum Ausdruck bringen, dass eine Schale bei ordnungsgemäßer Einstellung der Vorrichtung und bei bestimmungsgemäßen Gebrauch nicht aus dem Schacht herusrutschen kann.

Die erfindungsgemäße Vorrichtung weist andererseits ein oberes bewegliches Trennmesser auf, das zwischen einer geschlossenen Position, in der es in den Raum zwischen dem Rand der unteren, zu entnehmenden Schale und dem Rand der darüber angeordneten Schale hineinragt und einer geöffneten Position, in der der Schalenstapel freigegeben und bewegbar angeordnet ist, wobei diese Bewegung auch vice versa erfolgen kann.

Ferner ist eine angetriebene, bewegliche Saugvorrichtung vorgesehen, die mindestens ein Saugelement zur Anlage an die zu entnehmende Schale besitzt. Diese Saugvorrichtung dient zum Ergreifen und Abtransport der zu vereinzelnden Schalen.

Wenn im Rahmen der vorliegenden Unterlagen davon die Rede ist, dass die Schalen einen Rand besitzen, dann kann damit ein üblicher, im wesentlichen sich horizontal erstreckenden Rand bezeichnet sein. Dabei ist es nicht erforderlich dass der Rand vollständig um die Schale umläuft. Es ist auch ausreichend, wenn die Schalen einen derartigen Rand nur bereichsweise, zum Beispiel in dem (den) Bereich(en), welche mit den Hier beschriebenen Messern bzw. Messerteilen zusammenwirken.

Nach einer bevorzugten Ausführungsform umfasst das Separiermesser ein Paar von einander gegenüber angeordneten Separiermesserelementen, die jeweils mit einem Messerteil ausgestattet sind. Auch das Trennmesser umfasst ein Paar von einander gegenüber angeordneten Trennmesserelementen, die jeweils mit einem ersten Messerteil ausgestattet sind.

Jedes Trennmesserelement besitzt vorzugsweise jeweils ein zweites Messerteil. Ferner sind das erste Messerteil und das zweite Messerteil jedes Trennmesserelementes derart übereinander angeordnet sind, dass in der geschlossenen Position das erste Messerteil in den Raum zwischen dem Rand der unteren Schale und dem Rand der im Schalenstapel darüber angeordneten Schale hineinragt und das zweite Messerteil in den Raum zwischen dem Rand letzterer Schale und dem Rand der im Schalenstapel darüber angeordneten Schale hineinragt.

Am meisten bevorzugt sind die Trennmesserelemente jeweils mit einem dritten Messerteil ausgestattet, die in den Raum zwischen dem Rand der drittuntersten Schale und dem Rand der im Schalenstapel darüber angeordneten Schale hineinragen.

Alle Messerteile der Trennmesserelemente werden vorzugsweise gleichzeitig von der geschlossenen Position in die geöffnete Position und vice versa bewegt.

Alle übereinander angeordneten Messerteile der Trennmesserelemente sind dazu vorzugsweise fest miteinander verbunden oder einstückig ausgebildet.

Das Trennmesser bzw. Trennmesserelemente werden im Wesentlichen vorzugsweise waagerecht bewegt, während das Separiermesser bzw. die Separiermesserelemente vorzugsweise von der geöffneten Position schräg zur Senkrechten nach oben zum Schalenstapel zur geschlossenen Position und vice versa bewegt wird. Der Ausdruck "vice versa" bedeutet somit, dass das Separiermesser von der geschlossenen Position schräg zur Senkrechten vom Schalenstapel weg nach unten bewegt wird.

Die erfindungsgemäße Vorrichtung ist vorzugsweise zusätzlich mit einem Entlastungsmesser ausgestattet, das zwischen einer geschlossenen Position, in der es in den Raum zwischen dem Rand einer Schale im oberen Bereich des Schalenstapels und dem Rand einer im Schalenstapel darüber angeordneten Schale hineinragt, und einer geöffneten Position, in der Schalenstapel freigegeben ist sowie vice versa bewegbar angeordnet ist.

Weiterhin bevorzugt umfasst das Entlastungsmesser ein Paar von einander gegenüber angeordneten Entlastungsmesserelementen, die jeweils mit einem Messerteil ausgestattet sind.

Das Trennmesser ist vorzugsweise mit einer Leitung zum Einblasen von Luft zwischen die zu entnehmende Schale und der im Stapel darüber angeordneten Schale ausgerüstet. Die Leitung mündet bevorzugt im ersten Messerteil des dazugehörigen Trennmesserelementes und an dessen Spitze ins Freie.

Die erfindungsgemäße Vorrichtung weist vorzugsweise eine Steuerungseinheit auf, welche nach Einbringen des Schalenstapels in den Schacht (beispielsweise manuell oder mit Hilfe einer dafür geeigneten Vorrichtung) und nach Schließen aller Messer veranlasst, dass folgende Bewegungen durchgeführt werden, wobei die Bewegung von der geöffneten Position in die geschlossene Position als Schließen und die Bewegung von der geschlossenen Position in die geöffnete Position als Öffnen bezeichnet werden:
i) Öffnen des Separiermessers
ii) Abziehen der zu entnehmende Schale mit der Saugvorrichtung und Trennen der Saugvorrichtung von der vereinzelten Schale
iii) Schließen des Separiermessers und Hochfahren der Saugvorrichtung
iv) Öffnen des Trennmessers und, sofern vorhanden, des Entlastungsmessers
v) Schließen des Trennmessers und, sofern vorhanden, des Entlastungsmessers, und
vi) Wiederholen der Schritte i) bis V) solange wie erforderlich.

Die Erfindung wird im Folgenden anhand der beiliegenden Zeichnungen näher erläutert. In diesen Zeichnungen sind nur die gleichen wesentlichen Elemente der erfindungsgemäßen Vorrichtung dargestellt, , jedoch in unterschiedlichen Position eines Entstapelungszyklus. Die diese Elemente halternden Teile, antreibenden Vorrichtungen und Befestigungseinrichtungen sind aus Gründen der Übersichtlichkeit teilweise weggelassen.

In die Vorrichtung 1 ist ein Schalenstapel 2 aus mehreren ineinander gestapelten Schalen S_{E}, S₁, S₂, S₃... eingesetzt. Dieser Stapel 2 kann beispielsweise mit Hilfe eines Förderbandes oder ähnlichen sowie auch manuell eingesetzt werde. Darauf kommt es vorliegend nicht an.

Zur Aufnahme dieses Schalenstapels 2 dient dabei ein Schacht 11, der mit Leitblechen etc. ausgestatten sein kann. Letzteres ist Stand der Technik. Bei diesem Schacht 11 kann es sich auch um eine Art virtuellen Schacht handeln, der sich durch die übereinander gestapelten Schalen 2 ergibt, welcher beispielsweise lediglich durch die hier beschriebenen Messer gehaltert wird, so dass dieser Schalenstapel mehr oder weniger "frei schwebend" angeordnet ist.

In den Figuren sind die verschiedenen Stadien eines Entstapelungszyklus bzw. eines Vereinzelungszyklus näher erläutert. Dabei zeigen
- Figur 1: den Beginn eines Zyklus,
- Figur 2: den Zustand nach dem Öffnen des Separiermessers,
- Figur 3: den Zustand nach Entfernen bzw. Abziehen der unteren Schale,
- Figur 4: den Zustand nach Schließen des Separiermessers und Hochfahren der Saugvorrichtung und
- Figur 5: den Zustand nach Schließen des Trennmessers und des Entlastungsmessers.

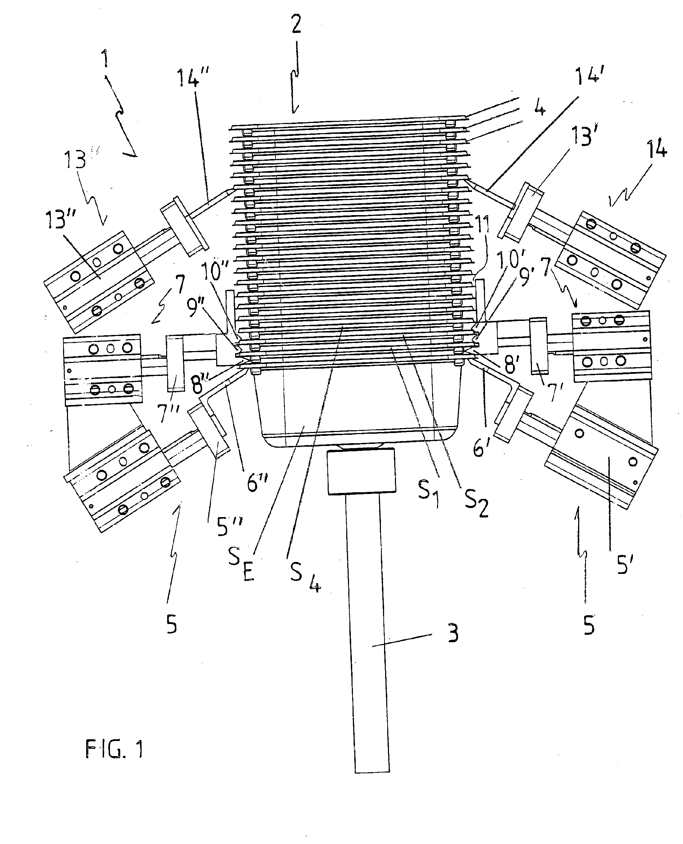

Figur 1 zeigt die Situation bzw. den Zustand, in der bzw. in dem ein Schalenstapel 2 von mehreren Schalen S_{E}, S₁, S₂, S₃... in den Schacht 11 einer erfindungsgemäßen Vorrichtung 1 eingesetzt ist und auf einem Saugelement 10 einer Vakuumsaugvorrichtung 3 mit dem Boden der untersten Schale bzw. zu entnehmenden oder zu vereinzelnden Schale S_{E} aufliegt. Das Separiermesser 5 mit den Separiermesserelementen 5', 5", das Trennmesser 7 mit den Trennmesserelementen 7', 7" und das Entlastungsmesser 13 mit den Entlastungsmesserelementen 13', 13" befinden sich in der geschlossenen Position.

Das Separiermesser 5 besitzt ein Paar von diametral einander gegenüberliegen Separiermesserelementen 5', 5", die jeweils mit einem Messerteil 6' bzw. 6" ausgestattet sind.

Auch das Trennmesser 7 besitzt ein Paar von diametral einander gegenüberliegen Trennmesserelementen 7' bzw. 7".

Jedes Trennmesserelement 7' bzw. 7" ist mit einem ersten Messerteil 8' bzw 8", einem zweiten Messerteil 9' bzw. 9" und einem dritten Messerteil 10', 10" ausgestattet.

Die Schale S_{E} liegt mit ihrem Rand 4 auf den Messerteilen 6', 6" des Separiermessers 5 auf. Anders gesagt, die freie stapelseitige Kante der Messerteilen 6', 6" greift unter den Rand 4.

Der Rand 4 der Schale S₁, liegt auf den ersten Messerteilen 8',8", der Rand 4 der Schale S₂ liegt auf den zweiten Messerteilen 9',9" und der Rand 4 der Schale S₃ liegt auf den dritten Messerteilen 10',10" des Trennmesserelementes 7' bzw. 7" auf. Die ersten Messerteile 8',8" ragen somit in den Raum zwischen den Rändern 4 der Schalen S_{E} und S₁ hinein. Die zweiten Messerteile 9', 9" ragen in den Raum zwischen den Rändern 4 der Schalen S₁ und S₂ hinein und die dritten Messerteile 10', 10" ragen in den Raum zwischen den Rändern der Schalen S₃ und S₄ hinein.

Die Messerteile 8', 8", 9', 9" 10', 10" der Trennmesserelemente 7', 7" sind einstückig ausgebildet und bilden einen Dreizack, wobei die unteren Messerteile 8', 8" der Trennmesserelemente 7', 7" und somit die untere Zacke des Dreizacks über die anderen Messerteile hinaus und weiter zum Schalenstapel 2 ragen.

In diesem unteren Messerteil 8', 8" befindet sich eine Hohlleitung 15 (nur angedeutet), durch die Luft zwischen die Schale SE und die Schale S₁ beim Abziehen der Schale S_{E} eingeblasen wird. Diese Leitung 15 mündet an der Spite bzw. an der freien Kante des entsprechenden Messerteils 8', 8". Auf diese Weise können die zu trennenden Schalen besser voneinander wegbewegt werden.

Die Messerteile 14', 14" der Entlastungsmesserelemente 13', 13" ragen ebenfalls in einen Raum zwischen dem Rand zweier übereinander angeordneter Schalen hinein. Die obere dieser beiden Schalen liegt dabei mit dem Rand 4 auf den Messerteilen 14', 14" der ntlastungsmesserelemente auf. Auch in diesem Fall greift die freie stapelseitige Kante der Messerteile 14', 14" unter den Rand 4.

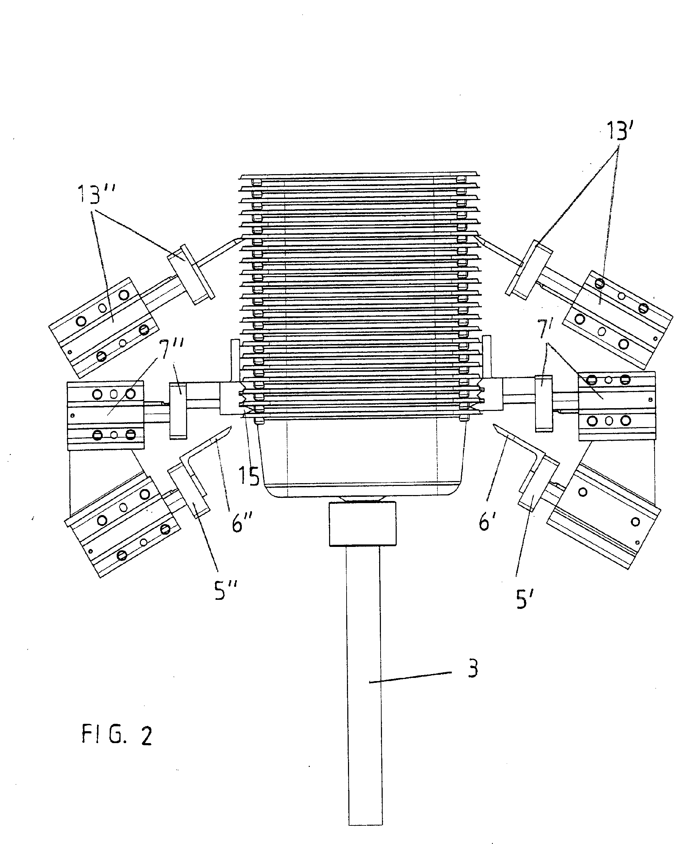

Um die Schale S_{E} entstapeln zu können, werden die Messerteile 6', 6" der Separiermesserelemente 5', 5" des Separiermessers 5 von der in der Figur 1 gezeigten geschlossenen Position in die in der Figur 2 gezeigte offene Position bewegt. Die Bewegungsrichtung zeigt dabei schräg nach unten von dem Schalenstapel 2 weg. Die Schale S_{E} ist freigegeben und kann mit Hilfe der Vakuumsaugvorrichtung 3 abgezogen werden.

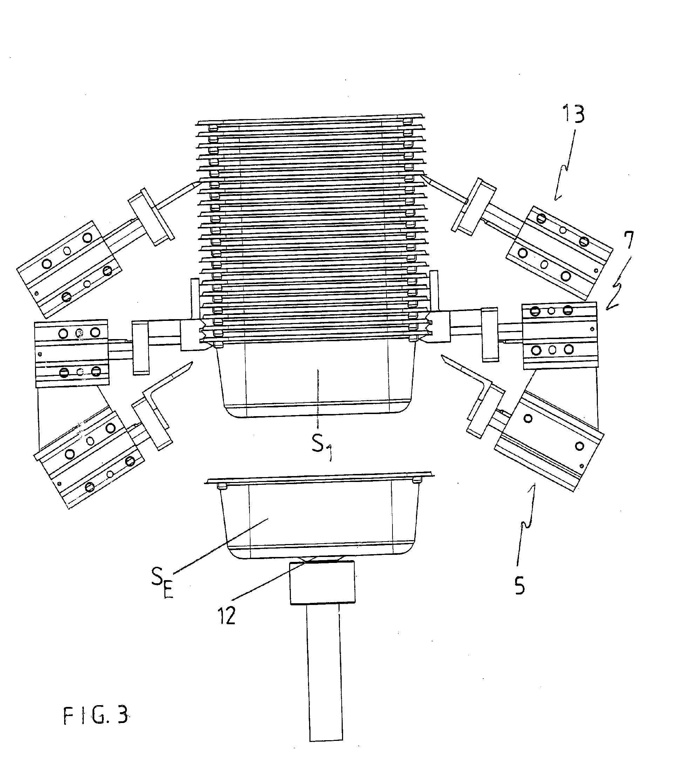

Die Figur 3 zeigt diejenige Situation, in der die Schale S_{E} vereinzelt wurde und von der Saugvorrichtung 3 gehaltert wird, jedoch vom Schalenstapel 2 vereinzelt wurde.

Die Vakuumsaugvorrichtung 3 setzt dann die Schale S_{E} auf einem Förderband ab. Dies ist in den Figuren nicht dargestellt.

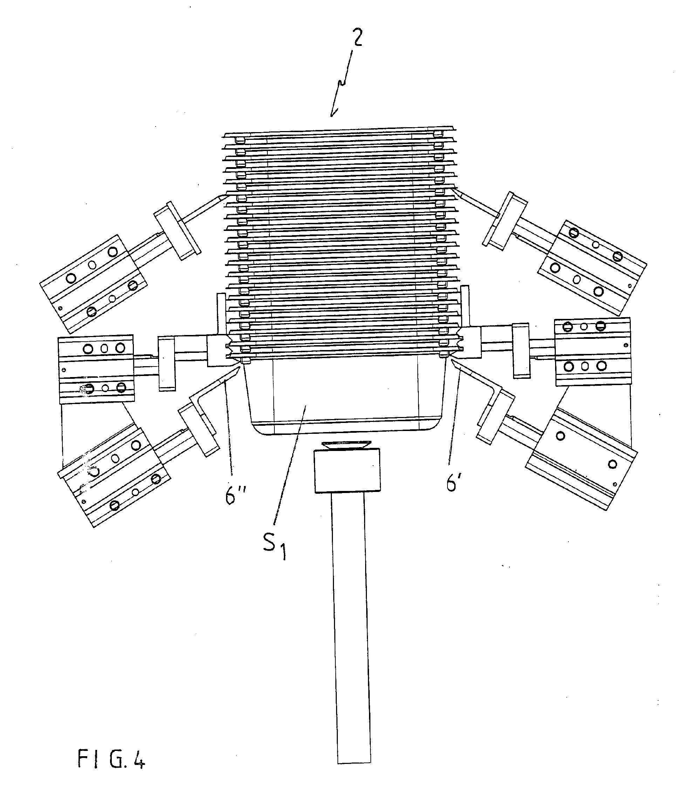

Anschließend wird die Vakuumsaugvorrichtung 3 wieder bis in die Figur 4 gezeigte Position hochgefahren. Zudem werden die Messerteile 6', 6" der Separiermesserelemente 5', 5" des Separiermessers 5 wieder in die geschlossene Position gebracht bzw. bewegt. Dabei werden sie schräg nach oben zum Schalenstapel 2 hin bewegt. Diese Situation ist in der Figur 4 dargestellt. In diesem Zustand wird der Schalenstapel 2 nicht durch die Messerteile 6', 6" der Separiermesserelemente 5', 5" des Separiermessers 5 gehalten. Vielmehr sind diese Messerteile 6', 6" von dem Rand 4 der nunmehr unteren Schale S1 beabstandet.

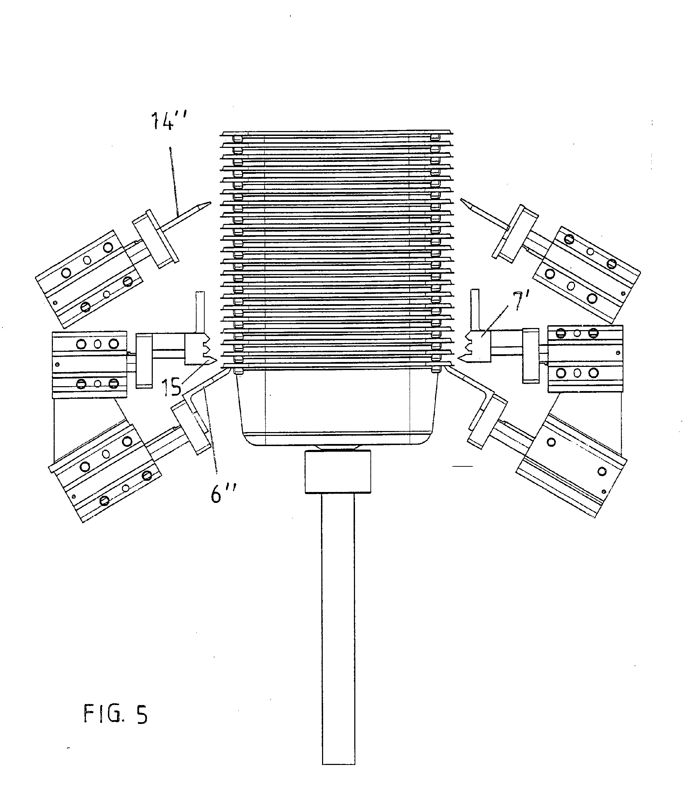

Die Messerteile 8', 8", 9', 9", 10', 10" der Trennmesserelemente 7', 7" des Trennmessers 7 werden dann in die geöffnete, in der Figur 5 gezeigte Position bewegt. Diese Bewegung erfolgt in etwa waagerecht.

Gleichzeitig werden auch die Messerteile 14', 14" der Entlastungsmesserelemente 13', 13" des Entlastungsmessers 13 von der geschlossenen Position in die in der Figur 5 gezeigte offene Position bewegt. Diese Bewegung erfolgt dabei schräg nach unten.

Sobald das Trennmesser 7 und das Entlastungsmesser 13 außer Eingriff mit den jeweiligen Rändern 4 der Schalen des Schalenstapels 2 kommen, rutscht dieser Schalenstapel 2 nach unten und wird einerseits von den Messerteilen 6', 6" des Separiermessers 5 und andererseits von der Saugvorrichtung 3 aufgefangen.

Um wieder in den in der Figur 1 gezeigten Zustand zu kommen, werden die Messerteile 8', 8", 9', 9", 10', 10" der Trennmesserelemente 7', 7" des Trennmessers und die Messerteile 14', 14" des Entlastungsmessers 13 wieder in die geschlossene Position bewegt, sodass sie in die dazugehörigen Räume zwischen den Rändern 4 der dazugehörigen Schalen hineinragen.

Die Bewegung der Messerteile 8', 8", 9', 9", 10', 10" erfolgt dabei in horizontaler Richtung, während die Bewegung der Messerteile 14', 14" des Entlastungsmessers 13 schräg nach oben erfolgt.

Der Antrieb für die verschiedenen Messer bzw. Messerteile kann elektrisch, pneumatisch oder auf jede andere bekannte Art und Weise erfolgen.

Durch das erläuterte Zusammenspiel von Separiermesser 5, Entlastungsmesser 13 und Trennmesser 7 kann eine optimale Entstapelung erreicht werden. Das Entstapeln kann dadurch deutlich schneller durchgeführt werden, ohne dass die mit den bekannten Vorrichtungen beschriebenen Nachteile eintreten.

Das Trennmesser verhindert nämlich ein Durchrutschen des Schalenstapels 2 nach unten, wenn die unterste Schale S_{E} durch die Vakuumsaugvorrichtung 3 abgezogen wird.

Das Entlastungsmesser 13 verringert das auf dem Trennmesser 7 bzw. dem Separiermesser 5 lastende Gewicht.

Die oben beschriebenen einzelnen Stadien des Entstapelungszyklus können sehr schnell nacheinander durchgeführt werden. Daher ist es mit der erfindungsgemäßen Vorrichtung möglich, mit nur einem Schacht eine Entstapelleistung zu erzielen, die bei den bekannten Vorrichtungen nur bei Einsatz von 2 oder mehr Schächten erreicht wird.

Bezugszeichen
- 1: Vorrichtung
- 2: Schalenstapel
- 3: Saugvorrichtung
- 4: Rand der Schale
- 5: Separiermesser
- 5',5": Separiermesserelement
- 6', 6": Messerteil des Separiermesserelementes
- 7: Trennmesser
- 7', 7": Trennmesserelement
- 8', 8": erstes Messerteil des Trennmesserelementes
- 9',9': zweites Messerteil des Trennmesserelementes
- 10', 10": drittes Messerteil des Trennmesserelementes
- 11: Schacht
- 12: Saugelement
- 13: Entlastungsmesser
- 13', 13": Entlastungsmesserelement
- 14', 14": Messerteil des Entlastungsmesserlementes
- 15: Leitung
- S_{E}, S₁, S₂, S₃...: Schalen des Schalenstapels

## Patentansprüche

1. Vorrichtung zum Entstapeln von ineinander gestapelten Schalen (S_{E}, S₁, S₂, S₃, S₄, S₅ ....), die mit einem insbesondere umlaufenden Rand (4) ausgestattet sind,
mit mindesten einem Schacht (11) zur Aufnahme eines Schalenstapels (2),
mit einem unteren beweglichen Separiermesser (5), das zwischen einer geschlossenen Position, in der es den Schacht (11) entnahmeseitig abschließt, und einer geöffneten Position, in der die untere zu entnehmenden Schale (S_{E}) freigegeben ist, sowie vice versa bewegbar angeordnet ist und
mit einer angetriebenen, beweglichen Saugvorrichtung (3) mit mindestens einem Saugelement (12) zur Anlage an die zu entnehmenden Schale (S_{E}),
**gekennzeichnet durch**
ein oberes bewegliches Trennmesser (7), das zwischen einer geschlossenen Position, in der es in den Raum zwischen dem Rand (4) der unteren, zu entnehmenden Schale (S_{E}) und dem Rand (4) der darüber angeordneten Schale (S₁) hineinragt, und einer geöffneten Position, in der der Schalenstapel (2) freigegeben ist, sowie vice versa bewegbar angeordnet ist.

2. Vorrichtung nach Anspruch 1,
**dadurch gekennzeichnet, dass** das Separiermesser (5) ein Paar von einander gegenüber angeordneten Separiermesserelementen (5',5") umfasst, die jeweils mit einem Messerteil (6', 6") ausgestattet sind, und dass das Trennmesser (7) ein Paar von einander gegenüber angeordneten Trennmesserelementen (7', 7") umfasst, die jeweils mit einem ersten Messerteil (8', 8") ausgestattet sind.

3. Vorrichtung nach Anspruch 2,
**dadurch gekennzeichnet,**
**dass** jedes Trennmesserelement (7', 7") jeweils ein zweites Messerteil (9', 9") besitzt,
**dass** das erste Messerteil (8' bzw. 8") und das zweite Messerteil (9' bzw. 9") jedes Trennmesserelementes (7', 7") derart übereinander angeordnet sind, dass in der geschlossenen Position das erste Messerteil (8' bzw. 8") in den Raum zwischen dem Rand (4) der unteren Schale (S_{E}) und dem Rand (4) der im Schalenstapel (2) darüber angeordneten Schale (S₁) hineinragt und das zweite Messerteil (9' bzw. 9") in den Raum zwischen dem Rand (4) letzterer Schale (S₁) und dem Rand (4) der im Schalenstapel (2) darüber angeordneten Schale (S₂) hineinragt.

4. Vorrichtung nach Anspruch 3,
**dadurch gekennzeichnet,**
**dass** die Trennmesserelemente (7', 7") jeweils mit einem dritten Messerteil (10', 10") ausgestattet ist, die in den Raum zwischen dem Rand (4) der drittuntersten Schale (S₂) und dem Rand (4) der im Schalenstapel (2) darüber angeordneten Schale (S₃) hineinragen.

5. Vorrichtung nach Anspruch 3 oder 4,
**dadurch gekennzeichnet,**
**dass** alle Messerteile (8', 8", 9', 9", 10', 10") des Trennmesserelemente (7', 7") gleichzeitig von der geschlossenen Position in die geöffnete Position und vice versa bewegt werden.

6. Vorrichtung nach Anspruch 5,
**dadurch gekennzeichnet,**
**dass** alle übereinander angeordneten Messerteile 8', 9', 10', bzw. 8", 9", 10") jedes Trennmesserelementes fest miteinander verbunden sind oder einstückig ausgebildet sind.

7. Vorrichtung nach einem der vorhergehenden Ansprüche ,
**dadurch gekennzeichnet,**
**dass** der Schacht (11) im Betriebszustand in wesentlichen senkrecht angeordnet ist.

8. Vorrichtung nach Anspruch ,
**dadurch gekennzeichnet,**
**dass** das Trennmesser (7) im wesentlichen waagerecht bewegt wird und das Separiermesser (5) von der geöffneten Position schräg zur Senkrechten nach oben zum Schalenstapel (2) hin zur geschlossenen Position bewegt wird und vice versa.

9. Vorrichtung nach einem der vorhergehenden Ansprüche ,
**gekennzeichnet durch**,
ein Entlastungsmesser (13) das zwischen einer geschlossenen Position, in der es in den Raum zwischen dem Rand (4) einer Schale (S₄) im oberen Bereich des Schalenstapels (2) und dem Rand (4) der im Schalenstapel (2) darüber angeordneten Schale (S₅) hineinragt, und einer geöffneten Position, in der der Schalenstapel (2) freigegeben ist, sowie vice versa bewegbar angeordnet ist.

10. Vorrichtung nach Anspruch 9,
**dadurch gekennzeichnet,**
**dass** das Entlastungsmesser (13) ein Paar von einander gegenüber angeordneten Entlastungsmesserelementen (13', 13") umfasst, die jeweils mit einem Messerteil (14', 14") ausgestattet sind.

11. Vorrichtung nach einem der vorhergehenden Ansprüche ,
**dadurch gekennzeichnet,**
**dass** das Trennmesser (7) mit einer Leitung (15) zu Einblasen von Luft zwischen die zu entnehmende Schale (SE) und der im Stapel (2) darüber angeordneten Schale (S1) ausgerüstet ist.

12. Vorrichtung nach Anspruch 11,
**dadurch gekennzeichnet,**
**dass** die Leitung (15) im ersten Messerteil (8', 8") des dazugehörigen Trennmesserelementes (7', 7") und an dessen Spitze ins Freie mündet.

13. Vorrichtung nach einem der vorhergehenden Ansprüche ,
**gekennzeichnet durch**,
eine Steuerungseinheit, welche nach Einbringen des Schalenstapels (2) in den Schacht (11) und Schließen aller Messer (5, 7, 13) veranlasst, dass folgende Bewegungen durchgeführt werden, wobei die Bewegung von der geöffneten Position in die geschlossene Position als Schließen und die Bewegung von der geschlossen Position in die geöffnete Position als Öffnen bezeichnet werden:
i) Öffnen des Separiermessers (5) ,
ii) Abziehen der zu entnehmende Schale (S_{E}) mit der Saugvorrichtung (3) und Trennen der Saugvorrichtung (3) von der vereinzelten Schale (S_{E})
iii) Schließen des Separiermessers (5) und Hochfahren der Saugvorrichtung (3)
iv) Öffnen des Trennmessers (7) und, sofern vorhanden, des Entlastungsmessers (13)
v) Schließen des Trennmessers (5) und, sofern vorhanden des Entlastungsmessers (13), und
vi) Wiederholen der Schritte i) bis v) solange wie erforderlich.
